(19) Europäisches Patentamt
European Patent Office
Office européen des brevets

(11) **EP 2 460 901 B1**

(12) **EUROPEAN PATENT SPECIFICATION**

(45) Date of publication and mention
of the grant of the patent:
**22.01.2020 Bulletin 2020/04**

(51) Int Cl.:
*C22C 38/00* *(2006.01)*          *C21D 9/46* *(2006.01)*
*C22C 38/60* *(2006.01)*

(21) Application number: **10804588.1**

(86) International application number:
**PCT/JP2010/063138**

(22) Date of filing: **28.07.2010**

(87) International publication number:
**WO 2011/013845 (03.02.2011 Gazette 2011/05)**

(54) **HIGH-STRENGTH STEEL SHEET, AND PROCESS FOR PRODUCTION THEREOF**

HOCHFESTES STAHLBLECH UND HERSTELLUNGSVERFAHREN DAFÜR

TÔLE D'ACIER DE RÉSISTANCE ÉLEVÉE, ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **30.07.2009 JP 2009178066
30.06.2010 JP 2010150167**

(43) Date of publication of application:
**06.06.2012 Bulletin 2012/23**

(73) Proprietor: **JFE Steel Corporation
Tokyo 100-0011 (JP)**

(72) Inventors:
• **MATSUDA, Hiroshi
TOKYO 100-0011 (JP)**
• **MIZUNO, Reiko
TOKYO 100-0011 (JP)**
• **FUNAKAWA, Yoshimasa
TOKYO 100-0011 (JP)**

(74) Representative: **Grünecker Patent- und
Rechtsanwälte
PartG mbB
Leopoldstraße 4
80802 München (DE)**

(56) References cited:
**WO-A2-2008/145871    JP-A- 2000 282 173
JP-A- 2006 207 018    JP-A- 2006 207 018
JP-A- 2006 207 018    JP-A- 2008 127 581
JP-A- 2008 169 475    JP-A- 2008 169 475
JP-A- 2008 169 475    JP-A- 2008 291 282**

**Description**

Technical Field

The present invention relates to a high strength steel sheet that is used in industrial fields of automobiles, electrical appliances, and the like, has good formability, and has a tensile strength of 980 MPa or higher and a method for manufacturing the high strength steel sheet.

The high strength steel sheet of the present invention includes steel sheets whose surface is galvanized or galvannealed.

Background Art

In recent years, the improvement in the fuel efficiency of automobiles has been an important subject from the viewpoint of global environment conservation. Therefore, by employing a high strength automobile material, there has been an active move to reduce the thickness of parts and thus to lighten the automobile body itself. However, since an increase in the strength of steel sheets reduces formability, the development of materials having both high strength and good formability has been demanded.

To satisfy such a demand, various multiphase steel sheets such as a ferrite-martensite dual phase steel (DP steel) and a TRIP steel that uses transformation induced plasticity of retained austenite have been developed.

For example, the following PTLs disclose DP steels. PTL 1 discloses a high strength steel sheet with low yield ratio that is excellent in surface quality and bending formability and has a tensile strength of 588 to 882 MPa, which is achieved by specifying the composition and the hot-rolling and annealing conditions. PTL 2 discloses a high strength cold-rolled steel sheet that is excellent in bendability, which is achieved by specifying the hot-rolling, cold-rolling, and annealing conditions of steel having a certain composition.

PTL 3 discloses a steel sheet that is excellent in collision safety and formability, which is achieved by specifying the volume fraction and grain diameter of martensite and the mechanical properties. PTL 4 discloses a high strength steel sheet, a high strength galvanized steel sheet, and a high strength galvannealed steel sheet that are excellent in stretch flangeability and crashworthiness, which is achieved by specifying the composition and the volume fraction and grain diameter of martensite. PTL 5 discloses a high strength steel sheet, a high strength galvanized steel sheet, and a high strength galvannealed steel sheet that are excellent in stretch flangeability, shape fixability, and crashworthiness, which is achieved by specifying the composition, the ferrite grain diameter and texture, and the volume fraction of martensite. PTL 6 discloses a high strength steel sheet having good mechanical properties, which is achieved by specifying the composition, the amount of martensite, and the manufacturing conditions.

PTLs 7 and 8 each disclose a high strength galvanized steel sheet having improved stretch flangeability and bendability, which is achieved by specifying the composition and the manufacturing conditions in a galvanizing line.

The following PTLs disclose steel sheets having a microstructure including a phase other than martensite as a hard second phase. PTL 9 discloses a steel sheet having improved fatigue properties, which is achieved by employing martensite and/or bainite as a hard second phase and specifying the composition, the grain diameter, the hardness ratio, and the like. PTL 10 discloses a steel sheet having improved stretch flangeability, which is achieved by mainly employing bainite or pearlite as a second phase and specifying the composition and the hardness ratio. PTL 11 discloses a high-strength and ductility galvanized steel sheet that is excellent in stretch flangeability, which is achieved by employing bainite and martensite as a hard second phase. PTL 12 discloses a multiphase steel sheet that is excellent in fatigue properties, which is achieved by employing bainite and martensite as a hard second phase and specifying the volume fraction of constituent phases, the grain diameter, the hardness, and the mean free path of the entire hard phase. PTL 13 discloses a high strength steel sheet that is excellent in ductility and stretch flangeability, which is achieved by specifying the composition and the amount of retained austenite. PTL 14 discloses a high strength multiphase cold-rolled steel sheet that is excellent in formability, which is achieved by employing a steel sheet including bainite and retained austenite and/or martensite and specifying the composition, the volume fraction of phases, and the like.

PTL 15 discloses a high strength steel sheet having improved formability, which is achieved by specifying the distribution state of grains of a hard second phase in ferrite and the ratio of the grains of tempered martensite and bainite in ferrite.

The following PTLs disclose steel sheets having a microstructure mainly composed of bainite. PTL 16 discloses an ultra-high strength cold-rolled steel sheet that is excellent in delayed fracture resistance and has a tensile strength of 1180 MPa or higher, which is achieved by specifying the composition and the manufacturing process. PTL 17 discloses an ultra-high strength cold-rolled steel sheet that is excellent in bendability and has a tensile strength of 980 MPa or higher, which is achieved by specifying the composition and the manufacturing method. PTL 18 discloses an ultra-high strength thin steel sheet that has a tensile strength of 980 MPa or higher and whose hydrogen embrittlement is prevented by limiting the number of iron-based carbide grains in tempered martensite to a certain number. Further high strength steel sheets are disclosed in PTL 19 and PTL 20.

Citation List

Patent Literature

PTL 1: Japanese Patent No. 1853389
PTL 2: Japanese Patent No. 3610883
PTL 3: Japanese Unexamined Patent Application Publication No. 11-61327
PTL 4: Japanese Unexamined Patent Application Publication No. 2003-213369
PTL 5: Japanese Unexamined Patent Application Publication No. 2003-213370
PTL 6: Japanese Unexamined Patent Application Publication (Translation of PCT Application) No. 2003-505604
PTL 7: Japanese Unexamined Patent Application Publication No. 6-93340
PTL 8: Japanese Unexamined Patent Application Publication No. 6-108152
PTL 9: Japanese Unexamined Patent Application Publication No. 7-11383
PTL 10: Japanese Unexamined Patent Application Publication No. 10-60593
PTL 11: Japanese Unexamined Patent Application Publication No. 2005-281854
PTL 12: Japanese Patent No. 3231204
PTL 13: Japanese Unexamined Patent Application Publication No. 2001-207234
PTL 14: Japanese Unexamined Patent Application Publication No. 7-207413
PTL 15: Japanese Unexamined Patent Application Publication No. 2005-264328
PTL 16: Japanese Patent No. 2616350
PTL 17: Japanese Patent No. 2621744
PTL 18: Japanese Patent No. 2826058
PTL 19: JP 2006 207018 A
PTL 20: JP 2008 169475 A

However, the above-described technologies pose the problems below. PTLs 1 to 7, 9, 10, and 12 to 14 disclose technologies regarding steel sheets having a tensile strength of lower than 900 MPa, and the formability often cannot be maintained if the strength is further increased. PTL 1 describes that annealing is performed in a single phase region and the subsequent cooling is performed to 400°C at a cooling rate of 6 to 20 °C/s. However, in the case of galvanized steel sheets, the adhesion of the coating needs to be taken into account and heating needs to be performed before coating because 400°C is lower than the temperature of a coating bath. Thus, galvanized steel sheets cannot be manufactured in a continuous galvanizing line having no heating equipment before the coating bath.

In PTLs 7 and 8, since tempered martensite needs to be formed during the heat treatment in a galvanizing line, equipment for reheating the steel sheet after the cooling to Ms temperature or lower is required. In PTL 11, bainite and martensite are employed as a hard second phase and the volume fractions are specified. However, the characteristics significantly vary in the specified range, and the operating conditions need to be precisely controlled to suppress the variation. In PTL 15, since cooling is performed to Ms temperature or lower to form martensite before bainite transformation, equipment for reheating the steel sheet is required. Furthermore, the operating conditions need to be precisely controlled to achieve stable characteristics. Consequently, the costs for equipment and operation are increased. In PTLs 16 and 17, the steel sheet needs to be held in a bainite-formation temperature range after annealing to obtain a microstructure mainly composed of bainite, which makes it difficult to provide ductility. In the case of galvanized steel sheets, the steel sheet needs to be reheated to a temperature higher than or equal to the temperature of a coating bath. PTL 18 only describes the reduction in hydrogen embrittlement of a steel sheet, and there is almost no consideration for formability although bending formability is considered to some extent.

In general, the ratio of a hard second phase to the entire microstructure needs to be increased to increase the strength of steel sheets. However, when the ratio of a hard second phase is increased, the formability of a steel sheet is strongly affected by that of the hard second phase. The reason is as follows. When the ratio of the hard second phase is low, minimal formability is achieved by deformation of ferrite itself that is a parent phase even if the workability of the hard second phase is insufficient. However, when the ratio of the hard second phase is high, the formability of a steel sheet is directly affected by the deformability of the hard second phase, not the deformation of ferrite.

Therefore, in the case of cold-rolled steel sheets, for example, martensite is formed through water quenching by adjusting the volume fraction of ferrite and a hard second phase using a continuous annealing furnace that can perform water quenching. Subsequently, the temperature is increased and held to temper the martensite, whereby the workability the hard second phase is improved.

However, in the case where equipment has no ability to temper the thus-formed martensite by increasing temperature and holding high temperature, the strength can be ensured, but it is difficult to ensure the workability of the hard second phase such as martensite.

In order to achieve stretch flangeability using a hard phase other than martensite, the workability of a hard second phase is ensured by employing ferrite as a parent phase and employing bainite or pearlite containing carbides as a hard second phase. However, in this case, sufficient ductility cannot be achieved.

When bainite is used, there is a problem in that the characteristics significantly vary due to the variations in the temperature in a bainite-formation region and the holding time. When martensite or retained austenite (including bainite containing retained austenite) is employed as a second phase, for example, a mixed microstructure of martensite and bainite is considered to be used as a second phase microstructure to ensure both elongation and stretch flangeability.

However, to employ a mixed microstructure composed of various phases as a second phase microstructure and precisely control the volume fraction or the like, the heat treatment conditions need to be precisely controlled, which often poses a problem of manufacturing stability.

Summary of Invention

Technical Problem

The present invention advantageously solves the problems described above. An object of the present invention is to provide a high strength steel sheet having a tensile strength of 980 MPa or higher that can minimize the formation of bainite, which easily causes a variation in properties such as strength and formability, and that can have both high strength and good formability and to provide an advantageous method for manufacturing the high strength steel sheet.

The formability is evaluated using a strength-elongation balance (TS × T. EL) that indicates elongation and a $\lambda$ value that indicates stretch flangeability. In the present invention, TS × T. El $\geq$ 14500 MPa·% and $\lambda \geq$ 15% are target properties.

Solution to Problem

To solve the problems described above, the inventors of the present invention have studied about the formation process of martensite, in particular, the effect of the cooling conditions of a steel sheet on martensite.

Consequently, the inventors have found that, by suitably controlling the heat treatment conditions after cold-rolling, martensite transformation is caused while at the same time the transformed martensite is tempered, and thus the martensite includes martensites having different hardnesses in a mixed manner. Thus, the inventors have found that good formability and high strength such as a tensile strength of 980 MPa or higher that are targeted in the present invention can be achieved.

The present invention has been completed based on the above-described findings.

As a solution to the above-mentioned problem, the present invention proposes a high strength steel sheet according to claim 1 and a method for manufacturing a high strength steel sheet according to independent claims 3, 4 or 5. A preferred embodiment of the inventive steel is set out in claim 2.

Advantageous Effects of Invention

According to the present invention, there can be stably provided a high strength steel sheet having good formability and a tensile strength of 980 MPa or higher. Brief Description of Drawings

[Fig. 1] Fig. 1 is a photograph of a martensite microstructure of a high strength steel sheet obtained according to the present invention.

[Fig. 2] Fig. 2 is a diagram showing the hardness distribution of the martensite microstructure of the high strength steel sheet obtained according to the present invention.

[Fig. 3] Fig. 3 is a comparative diagram showing the hardness distributions of soft tempered martensite and hard quenched martensite in the martensite microstructure of the high strength steel sheet obtained according to the present invention.

[Fig. 4] Fig. 4 is a photograph of a martensite microstructure of a high strength steel sheet obtained by a conventional method.

[Fig. 5] Fig. 5 is a diagram showing the hardness distribution of the martensite microstructure of the high strength steel sheet obtained by a conventional method. Description of Embodiments

The present invention will now be specifically described.

The reason for the above-described limitation of the microstructure of a steel sheet in the present invention will be described below.

• Area ratio of martensite: 50% or more

Martensite is a hard phase that is useful for increasing strength. In the present invention, as described below, the formability can be improved by suitably controlling the hardness distribution of martensite. However, if the area ratio of martensite is less than 50%, desired strength is not easily achieved and thus the area ratio of martensite is limited to be 50% or more. Since the formability is further improved as the area ratio of martensite is increased, the area ratio of martensite is preferably 70% or more and more preferably 90% or more.

• Area ratio of ferrite: 50% or less (including 0%)

The ratio of ferrite is important to achieve both formability and a tensile strength of 980 MPa or higher, and the area ratio of ferrite needs to be 50% or less. This is because, if the area ratio of ferrite is more than 50%, a sufficient amount of hard phase cannot be ensured and thus the strength becomes insufficient. The area ratio of ferrite may be 0%.

• Area ratio of bainite: 10% or less (including 0%)

Bainite is a hard phase that contributes to an increase in strength, but the characteristics significantly vary in accordance with the formation temperature range, thereby sometimes increasing the variation in the quality of material. Therefore, the area ratio of bainite in a steel microstructure is desirably as low as possible, but up to 10% of bainite is tolerable. The area ratio of bainite is preferably 5% or less and may be 0%.

• Area ratio of retained austenite: 10% or less (including 0%)

Retained austenite is transformed into hard martensite when processed, which decreases stretch flangeability. Thus, the area ratio of retained austenite in a steel microstructure is desirably as low as possible, but up to 10% of retained austenite is tolerable. The area ratio of retained austenite is preferably 5% or less and more preferably 3% or less, and may be 0%.

The steel sheet of the present invention preferably has the above-described steel microstructure, but other components such as pearlite may be contained as long as the total area ratio is 10% or less.

• Full-width at half maximum in a frequency distribution of nano-hardness, which is obtained by measuring the hardness distribution of martensite: 2.0 GPa or more

The hardness distribution of martensite is the most important requirement in the present invention.

To improve the formability of martensite, which is a hard microstructure, the inventors of the present invention have fully studied the relationship between martensite microstructure and formability. As a result, it has been confirmed that the ductility is improved in a martensite microstructure including martensites having different hardnesses in a mixed manner. The reason is unclear, but it is believed that, by mixing a hard microstructure and a soft microstructure as in ferrite-martensite (DP) steel, the work hardening of the soft microstructure is facilitated and thus the ductility is improved.

According to the study conducted by the inventors, it has been found from the evaluation of a hardness distribution obtained by randomly measuring the hardness in the martensite microstructure that, when the full-width at half maximum is 2.0 GPa or more, the elongation is improved. Thus, in the present invention, the full-width at half maximum in a frequency distribution of nano-hardness, which is obtained by measuring the hardness distribution of martensite, is specified to be 2.0 GPa or more.

The full-width at half maximum in a frequency distribution of nano-hardness of martensite subjected to typical quenching and tempering treatments is normally about 1.0 to 1.9 GPa, and never exceeds 2.0 GPa. The full-width at half maximum of as-quenched martensite is also the same value.

A high strength steel sheet was manufactured by a method including the steps of hot-rolling and then cold-rolling a slab having a composition including C: 0.2%, Si: 1.5%, Mn: 0.3%, P: 0.011%, S:0.002%, Al: 0.044%, N: 0.0033%, and Cr: 1.0% with the balance being Fe and incidental impurities to form a cold-rolled steel sheet; annealing the steel sheet at 900°C for 150 seconds; cooling the steel sheet to 200°C at a cooling rate of 40 °C/s; holding the steel sheet at that temperature for 90 seconds; and cooling the steel sheet at a cooling rate of 15 °C/s. The martensite start temperature (Ms temperature) of the steel is 419°C.

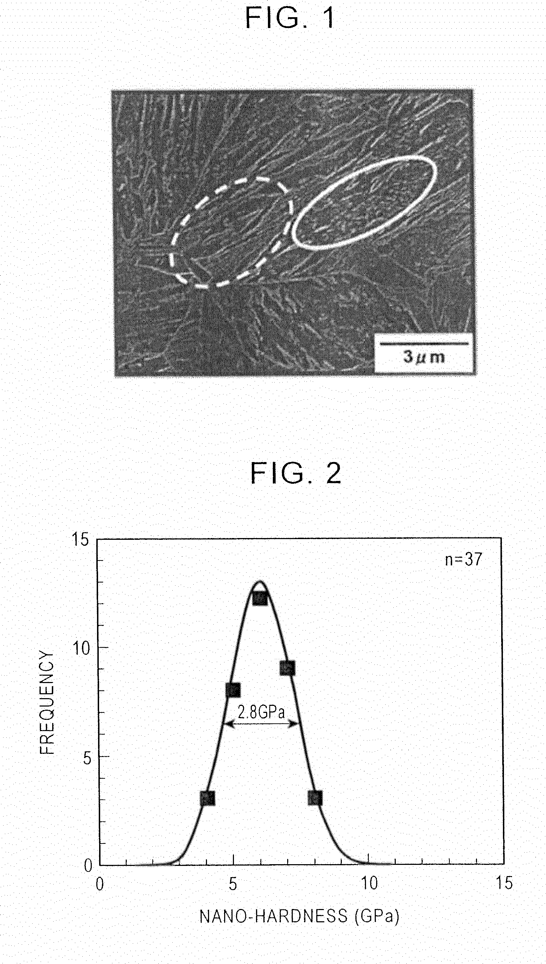

Fig. 1 is a photograph of the martensite microstructure of the thus-obtained high strength steel sheet.

Fig. 2 shows the result of a hardness distribution obtained by randomly measuring (n = 37) the hardness of the martensite microstructure of the high strength steel sheet.

As shown in Fig. 2, the full-width at half maximum in the frequency distribution of nano-hardness of this sample was 2.8 GPa. Herein, TS × T. El was 17567 MPa·% and it was confirmed that the sample had high elongation.

As a result of the thorough study about the martensite microstructure shown in Fig. 1, the microstructure was found to include soft tempered martensite (a region enclosed with a solid line in the drawing) subjected to martensite transformation at relatively high temperature and then tempering and hard quenched martensite (a region enclosed with a broken line in the drawing) subjected to martensite transformation at relatively low temperature in a mixed manner.

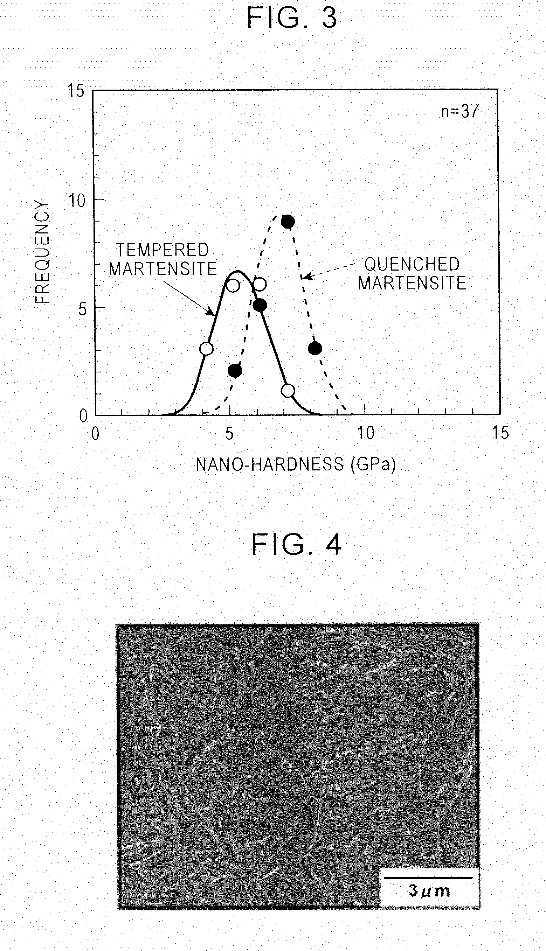

The full-width at half maximum in the frequency distribution of nano-hardness was determined for each of the regions. Fig. 3 shows the results.

As is clear from Fig. 3, there is a significant difference in nano-hardness between the region enclosed with a solid line and the region enclosed with a broken line.

Accordingly, it is believed that, by mixing soft martensite and hard martensite, the full-width at half maximum in the frequency distribution of nano-hardness is increased as shown in Fig. 2 and thus the elongation is effectively improved.

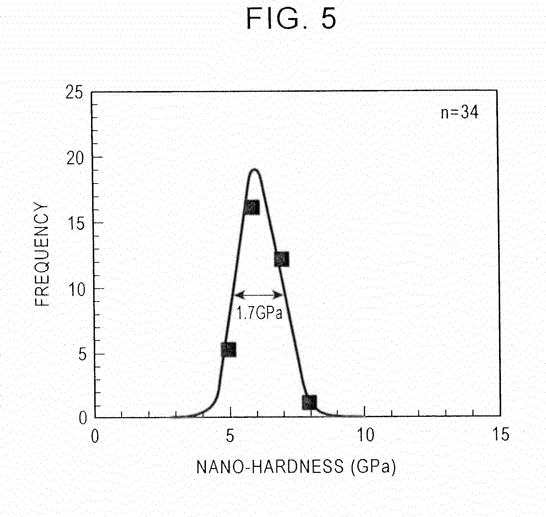

In contrast, the microstructure of the above-described conventional high strength steel sheet manufactured by performing tempering after the steel sheet was cooled to room temperature by a typical method without performing a holding treatment in a temperature range just below Ms temperature was basically a single phase microstructure of tempered martensite as shown in Fig. 4. Furthermore, the full-width at half maximum in the frequency distribution of nano-hardness was only about 1.7 GPa as shown in Fig. 5. Note that this steel sheet had a TS × T. El of 11466 MPa·%, and the elongation was poor compared with the mixed microstructure of soft martensite and hard martensite.

The reason why the composition is set in the above-described range in the present invention will now be described. The symbol "%" used for each component means "% by mass" unless otherwise specified.

• C: 0.1% or more and 0.3% or less

C is an essential element for increasing the strength of a steel sheet. A C content of less than 0.1% causes difficulty in achieving both strength and formability such as ductility or stretch flangeability of the steel sheet. On the other hand, a C content of more than 0.3% causes a significant hardening of welds and weld heat-affected zones, thereby reducing weldability. Thus, in the present invention, the C content is limited to be in the range of 0.1% or more and 0.3% or less. The C content is preferably in the range of 0.12% or more and 0.23% or less.

• Si: 1.6% or less

Si is a useful element for solution hardening of ferrite, and the Si content is preferably 0.1% or more to ensure the ductility and the hardness of ferrite. However, the excessive addition causes the degradation of surface quality due to the occurrence of red scale and the like and the degradation of the adhesion of a coating. Thus, the Si content is set to be 1.6% or less.

• Mn: 1.5% or more and 2.5% or less

Mn is a useful element for increasing the strength of steel. Mn also has an effect of stabilizing austenite and is an element necessary for ensuring the area ratio of a hard phase. Therefore, 1.5% or more of Mn needs to be contained. However, an excessive content causes the degradation of castability or the like. Thus, the Mn content is limited to be in the range of 1.5% or more and 2.5% or less.

• P: 0.1% or less

P causes embrittlement due to grain boundary segregation and degrades crashworthiness, but a P content of up to 0.1% is tolerable. Furthermore, in the case where galvannealing is performed, a P content of more than 0.1% significantly reduces the rate of alloying. Thus, the P content is limited to be 0.1% or less. The P content is preferably 0.05% or less.

• S: 0.07% or less

S is formed into MnS as an inclusion that causes not only the degradation of crashworthiness but also cracks along the metal flow in welds. Thus, the S content is desirably minimized. However, a S content of up to 0.07% is tolerable in terms of manufacturing costs. The S content is preferably 0.04% or less and more preferably 0.01% or less.

• Al: 1.0% or less

A1 is an element that contributes to ferrite formation and a useful element for controlling the amount of ferrite formed during manufacturing. However, the excessive addition of more than 1.0% of Al degrades the quality of a slab during steelmaking. Thus, the Al content is set to be 1.0% or less and preferably 0.5% or less. Since an excessively low Al content sometimes makes it difficult to perform deoxidation, the Al content is preferably 0.01% or more.

• N: 0.008% or less

N is an element that most degrades the anti-aging property of steel. Therefore, the N content is desirably minimized. A N content of more than 0.008% causes significant degradation of an anti-aging property. Thus, the N content is set to be 0.008% or less and preferably 0.006% or less.

In the present invention, if necessary, the components described below can be suitably contained in addition to the basic components described above, wherein REM is mandatory.

• At least one element selected from Cr: 0.05% or more and 5.0% or less, V: 0.005% or more and 1.0% or less, and Mo: 0.005% or more and 0.5% or less

Cr, V, and Mo have an effect of suppressing the formation of pearlite when a steel sheet is cooled from the annealing temperature and thus can be optionally added. The effect is produced at a Cr content of 0.05% or more, a V content of 0.005% or more, or a Mo content of 0.005% or more. On the other hand, an excessive Cr content of more than 5.0%, an excessive V content of more than 1.0%, or an excessive Mo content of more than 0.5% excessively increases the area ratio of a hard phase, thereby unnecessarily increasing the strength. Consequently, the formability is degraded. Thus, when these elements are contained, the Cr content is preferably set in the range of 0.005% or more and 5.0% or less, the V content is preferably set in the range of 0.005% or more and 1.0% or less, and the Mo content is preferably set in the range of 0.005% or more and 0.5% or less.

Furthermore, at least one element selected from Ti: 0.01% or more and 0.1% or less, Nb: 0.01% or more and 0.1% or less, B: 0.0003% or more and 0.0050% or less, Ni: 0.05% or more and 2.0% or less, and Cu: 0.05% or more and 2.0% or less can be contained. The reason for the limitation is as follows.

• Ti: 0.01% or more and 0.1% or less, Nb: 0.01% or more and 0.1% or less Ti: 0.01% or more and 0.1% or less, Nb: 0.01% or more and 0.1% or less

• Ti and Nb are useful for precipitation strengthening of steel and the effect is produced at a Ti content of 0.01% or more or a Nb content of 0.01% or more. However, a Ti content of more than 0.1% or a Nb content of more than 0.1% degrades the formability and shape flexibility. Thus, the Ti content and the Nb content are each preferably set in the range of 0.01% or more and 0.1% or less.

• B: 0.0003% or more and 0.0050% or less

Since B suppresses the formation and growth of ferrite from austenite grain boundaries and effectively contributes to strengthening of steel, B can be optionally added. The effect is produced at a B content of 0.0003% or more. On the other hand, a B content of more than 0.0050% reduces formability. Therefore, when B is contained, the B content is set in the range of 0.0003% or more and 0.0050% or less.

• Ni: 0.05% or more and 2.0% or less, Cu: 0.05% or more and 2.0% or less

In the case where galvanizing is performed, Ni and Cu facilitate internal oxidation, thereby improving the adhesion of a coating. The effect is produced at a Ni content of 0.05% or more or a Cu content of 0.05% or more. However, a Ni content of more than 2.0% or a Cu content of more than 2.0% degrades the formability of a steel sheet. Ni and Cu are useful elements for strengthening steel. Thus, the Ni content and the Cu content are each set in the range of 0.05% or more and 2.0% or less.

• One or two elements selected from Ca: 0.001% or more and 0.005% or less and REM: 0.001% or more and 0.005% or less

Ca and REM are useful elements for spheroidizing the shape of a sulfide and lessening an adverse effect of the sulfide on stretch flangeability. The effect is produced at a Ca content of 0.001% or more or an REM content of 0.001% or more. However, a Ca content of more than 0.005% or an REM content of more than 0.005% increases the number of inclusions or the like and causes, for example, surface defects and internal defects. Thus, when Ca and REM are contained, the Ca content and the REM content are each set in the range of 0.001% or more and 0.005% or less.

In the steel sheet of the present invention, components other than the components described above are Fe and incidental impurities. However, components other than the components described above may be contained to the extent that the advantages of the present invention are not impaired.

In the present invention, a galvanized layer or a galvannealed layer may be formed on the surface of a steel sheet.

A preferred method for manufacturing a steel sheet according to the present invention and the reason for the limitation of the conditions will now be described.

First, a slab prepared to have the above-described preferred composition is produced, hot-rolled, and then cold-rolled to form a cold-rolled steel sheet. In the present invention, these processes are not particularly limited, and can be performed by typical methods.

The preferred manufacturing conditions will now be described below. A slab is heated to 1100°C or higher and 1300°C or lower and subjected to finish hot-rolling at a temperature of 870°C or higher and 950°C or lower. The thus-obtained hot-rolled steel sheet is coiled at a temperature of 350°C or higher and 720°C or lower. Subsequently, the hot-rolled steel sheet is pickled and cold-rolled at a reduction ratio of 40% or more and 90% or less to obtain a cold-rolled steel sheet.

The hot-rolled steel sheet is produced through the typical steps of steel making, casting, and hot-rolling. However, the hot-rolled steel sheet may be produced by, for example, thin slab casting without performing part of or the entire hot-rolling step.

• Annealing conditions of cold-rolled steel sheet

This annealing treatment is performed in order to ensure an austenite phase having an area ratio of 50% or more by causing the reverse transformation into austenite to sufficiently proceed in an austenite single phase region or in a dual phase region of an austenite phase and a ferrite phase. Herein, even in an appropriate temperature range, proper annealing time is different between high-temperature range and low-temperature range.

That is, since the reverse transformation into austenite proceeds within a relatively short time in a high-temperature range of 850°C or higher, the annealing time may be at least 15 seconds. On the other hand, since the reverse transformation into austenite does not easily proceed in a temperature range of lower than 850°C even if the temperature is more than $Ac_3$ temperature, the annealing time needs to be 50 seconds or longer. Furthermore, when the annealing temperature is lower than 770°C, a carbide is not easily dissolved and thus the annealing time needs to be at least 100 seconds.

Therefore, in the present invention, the annealing temperature range is divided into three ranges, namely, a temperature range of 700°C or higher and lower than 770°C, a temperature range of 770°C or higher and lower than 850°C, and a temperature range of 850°C or higher and 950°C or lower. The annealing time is limited to be 100 seconds or longer and 1800 seconds or shorter in a temperature range of 700°C or higher and lower than 770°C, 50 seconds or longer and 1800 seconds or shorter in a temperature range of 770°C or higher and lower than 850°C, and 15 seconds or longer and 1800 seconds or shorter in a temperature range of 850°C or higher and 950°C or lower. The annealing is performed under any one of the conditions. A temperature range of 850°C or higher and 950°C or lower is preferred compared with other temperature ranges because annealing is completed within a short time.

There is no particular upper limit of the annealing time in each of the temperature ranges in terms of ensuring of an austenite phase. However, an excessively long annealing time increases the cost due to large energy consumption. Therefore, the upper limit of the annealing time in each of the temperature ranges is set to be 1800 seconds. In particular, the annealing time in a temperature range of 850°C or higher and 950°C or lower is preferably 600 seconds or shorter because the cost is increased due to large energy consumption when the annealing is performed for longer than 600 seconds.

The lower limit of the annealing temperature is set to be 700°C. This is because, if the annealing temperature is lower than 700°C, a carbide in the steel sheet is not sufficiently dissolved, or the recrystallization of ferrite is not completed and thus desired ductility and stretch flangeability are not achieved. On the other hand, the upper limit of the annealing temperature is set to be 950°C. This is because, if the annealing temperature is more than 950°C, austenite grains significantly grow and the constituent phases formed by cooling performed later are coarsened, which may degrade the ductility and stretch flangeability.

• Cooling rate from annealing temperature

First, cooling is performed to 500°C at a cooling rate of 4 °C/s or more and then cooling is performed from 500°C at a cooling rate of 7 °C/s or more.

The conditions of cooling performed between the annealing and low-temperature holding described below are important to suppress the precipitation of phases other than a martensite phase desired in the present invention. In the temperature range from annealing temperature to temperature of low-temperature holding, pearlite transformation and bainite transformation easily occur and an intended microstructure is sometimes not obtained. Herein, pearlite transformation easily occurs in the temperature range from annealing temperature to 500°C, and bainite transformation easily occurs in the temperature range from 500°C to temperature of low-temperature holding. To suppress such pearlite transformation and bainite transformation and to obtain an intended microstructure, cooling needs to be performed at a cooling rate of 4 °C/s or more in the temperature range from annealing temperature to 500°C and subsequently cooling needs to be performed at a cooling rate of 7 °C/s or more in the temperature range from 500°C to temperature of low-temperature holding.

Preferably, cooling is performed at a cooling rate of 20 °C/s or more from annealing temperature to temperature of low-temperature holding. More preferably, cooling is performed at a cooling rate of 30 °C/s or more.

The upper limit of the cooling rate is not particularly limited, but the cooling rate is preferably about 200 °C/s or less because special cooling equipment is required to achieve a cooling rate of more than 200 °C/s.

• Holding is performed in a temperature range of 100°C to (Ms - 10°C) for 10 seconds or longer and then cooling is performed at a cooling rate of 5 °C/s or more

This low-temperature holding and the subsequent cooling are the most important processes in the present invention.

First, by performing cooling to a temperature of low-temperature holding that is lower than or equal to a martensite start temperature (Ms temperature) and by performing temperature holding in the temperature range for 10 seconds or longer, martensite transformation proceeds in accordance with the degree of supercooling. Furthermore, by performing temperature holding in a low temperature range, the transformed martensite is quickly tempered. As a result, the tempered martensite is obtained by being tempered at relatively high temperature and thus soft martensite is obtained.

Austenite that has not been transformed in the holding process is subjected to martensite transformation in a cooling process performed after the low-temperature holding. In this case, tempering also proceeds, but the tempering speed is low because tempering is performed at low temperature. As a result, hard martensite is obtained. As described above, by performing temperature holding in a certain temperature range, a microstructure including martensites in different tempered states, that is, martensites having different hardnesses in a mixed manner can be obtained.

According to the study conducted by the inventors, when the temperature of low-temperature holding is lower than 100°C, the tempering of transformed martensite slowly proceeds. On the other hand, when the temperature of low-temperature holding is higher than (Ms - 10°C), martensite transformation does not sufficiently proceed. Therefore, the temperature holding needs to be performed in a temperature range of 100°C to (Ms - 10°C) for 10 seconds or longer and preferably for 80 seconds or longer. If the holding time is shorter than 10 seconds, the tempering does not sufficiently proceed and thus intended properties cannot be achieved. The upper limit of the holding time is not particularly limited. However, an excessively long holding time does not produce significant effects and, on the contrary, part of a carbide may be heterogeneously coarsened. Thus, the upper limit of the holding time is suitably set to be about 1200 seconds.

To obtain hard martensite in the cooling process after the low-temperature holding, it is essential to perform cooling at a cooling rate of 5 °C/s or more and preferably 15 °C/s or more.

Particularly preferred conditions of the annealing treatment and the subsequent cooling treatment of the cold-rolled steel sheet are described below.

That is, the cold-rolled steel sheet is annealed in a temperature range of 850°C or higher and 950°C or lower for 15 seconds or longer and 600 seconds or shorter, cooled at a cooling rate of 20 °C/s or more, held in a temperature range of 100°C to (Ms - 10°C) for 80 seconds or longer, and then cooled at a cooling rate of 15 °C/s or more.

The steel sheet of the present invention can be galvanized and further galvannealed. The galvanizing and galvannealing treatments are preferably performed in a continuous galvanizing line while the above-described annealing and cooling conditions are satisfied. The galvanizing and galvannealing treatments are preferably performed in a temperature range of 420°C or higher and 550°C or lower. In this case, the holding time in a temperature range of 420°C or higher and 550°C or lower is preferably set to be 600 seconds or shorter, the time including galvanizing treatment time and further galvannealing treatment time. The galvanizing and galvannealing treatments may be performed at any stage as long as a predetermined microstructure is obtained. It is advantageous to perform the galvanizing and galvannealing treatments during or after the temperature holding in a temperature range of 100°C to (Ms - 10°C).

To precisely determine the Ms temperature, actual measurement needs to be performed through a Formaster test or the like. However, there is a relatively good correlation between the Ms temperature and M defined by the formula (1) below, and thus the Ms temperature can be determined using the formula (1) below:

$$M\ (°C) = 540 - 361 \times \{[C\%]/(1 - [\alpha\%]/100)\} - 6 \times [Si\%] - 40$$
$$\times\ [Mn\%] + 30 \times [Al\%] - 20 \times [Cr\%] - 35 \times [V\%] - 10 \times [Mo\%] -$$
$$17 \times [Ni\%] - 10 \times [Cu\%] \cdots (1)$$

where [X%] represents mass% of an alloy element X and [α%] represents an area ratio (%) of polygonal ferrite.

In the present invention, the area ratio of polygonal ferrite is equal to the area ratio of ferrite observed in the steel sheet that has been subjected to annealing and cooling under the above-described conditions.

A method of galvanizing and galvannealing treatments is as follows.

First, a steel sheet is immersed in a coating bath and the coating weight is adjusted using gas wiping or the like. In the case where the steel sheet is galvanized, the amount of dissolved Al in the coating bath is suitably in the range of 0.12% or more and 0.22% or less. In the case where the steel sheet is galvannealed, the amount of dissolved Al is suitably in the range of 0.08% or more and 0.18% or less. In the case where the steel sheet is galvanized, the temperature of the coating bath is desirably in the range of 420°C or higher and 500°C or lower. In the case where the steel sheet is galvannealed by further performing alloying treatment, the temperature during alloying is desirably in the range of 450°C or higher and 550°C or lower. If the alloying temperature is higher than 550°C, an excessive amount of carbide is precipitated from untransformed austenite or the transformation into pearlite is caused, whereby desired strength and elongation are sometimes not achieved. Powdering property is also degraded. If the alloying temperature is lower than 450°C, the alloying does not proceed.

The coating weight is preferably about 20 to 150 g/m² per surface. If the coating weight is less than 20 g/m², corrosion resistance is degraded. Meanwhile, even if the coating weight is more than 150 g/m², an effect of increasing the corrosion resistance is saturated, which merely increases the cost. The degree of alloying is preferably about 7 to 15% by mass on a Fe content basis in the coating layer. If the Fe content is less than 7% by mass, uneven alloying is caused and the surface appearance quality is degraded. Furthermore, a so-called ζ phase is formed and thus the slidability is degraded. If the Fe content is more than 15% by mass, a large amount of hard brittle Γ phase is formed and the adhesion of the coating is degraded.

In the present invention, the holding temperatures during annealing and low-temperature holding are not necessarily constant. Even if the holding temperatures vary, the spirit of the present invention is not impaired as long as the holding temperatures are within the specified ranges. The same applies to the cooling rate. The steel sheet may be heat-treated with any equipment as long as the thermal history is satisfied. Furthermore, the scope of the present invention includes temper rolling performed on the steel sheet of the present invention after heat treatment to correct the shape.

[Examples]

The present invention will now be further described based on Examples. The present invention is not limited to Examples below. It will be understood that modifications may be made without departing from the scope of the present invention.

Inventive Example

A slab to be formed into a steel sheet having the composition shown in Table 1 was heated to 1250°C and subjected to finish hot-rolling at 880°C. The hot-rolled steel sheet was coiled at 600°C, pickled, and cold-rolled at a reduction ratio of 65% to obtain a cold-rolled steel sheet having a thickness of 1.2 mm. The resultant cold-rolled steel sheet was subjected to heat treatment under the conditions shown in Table 2. Note that typical quenching was not performed on any sample shown in Table 2. Herein, the holding time in Table 2 was a time held at the holding temperature shown in Table 2. Ms in Table 2 was determined from the formula (1) described above.

Subsequently, some samples were galvanized, and furthermore some of the samples were galvannealed. The galvanizing treatment was performed on both surfaces in a coating bath having a temperature of 463°C at a coating weight of 50 g/m² (per surface). The galvannealing treatment was performed such that Fe% (iron content) in the coating layer was adjusted to 9% by mass.

The resultant steel sheet was subjected to temper rolling at a reduction ratio (elongation ratio) of 0.3% regardless of the presence or absence of a coating.

Table 2 also shows the volume fraction of a microstructure of the thus-obtained steel sheet.

Table 3 shows the measurement results of various properties of the steel sheet.

A method for measuring the volume fraction of a microstructure and a method for evaluating the various properties will be described below.

The area ratio of each phase in the microstructure of the steel sheet was measured by observing a vertical section of the steel microstructure with a scanning electron microscope (SEM) at a magnification of 3000×, the section being obtained by cutting the steel sheet in the rolling direction. The observation was performed on 3 or more fields of view and the average value was employed. The area ratios of martensite, ferrite, and bainite were determined using the polished samples. The amount of retained austenite was measured by performing X-ray diffraction at a plane located at a depth of one quarter in the thickness direction.

Nano-hardness was measured by performing electrolytic polishing on a sample surface and using TRIBO SCOPE manufactured by HYSITRON. The nano-hardness was measured at 30 or more randomly selected points in the martensite microstructure at a constant load of 3000 $\mu$N. A normal distribution curve was determined from the frequency distribution of the nano-hardness values to obtain the full-width at half maximum.

Strength was evaluated by performing a tensile test in accordance with JIS Z 2241 using a JIS No. 5 test piece taken from the steel sheet in the rolling direction of the steel sheet. Tensile strength (TS), yield strength (YS), and total elongation (T. El) were measured. The product of the tensile strength and the total elongation (TS × T. El) was calculated to evaluate the elongation (strength-elongation balance). In the present invention, when TS × T. El $\geq$ 14500 (MPa·%), the elongation was determined to be good.

Stretch flangeability was evaluated in accordance with The Japan Iron and Steel Federation Standard JFST 1001. The resulting steel sheet was cut into pieces each having a size of 100 mm × 100 mm. A hole having a diameter of 10 mm was made in the piece by punching at a clearance of 12% of the thickness. A conical punch with a 60° apex was forced into the hole while the piece was fixed with a die having an inner diameter of 75 mm at a blank-holding pressure of 88.2 kN. The diameter of the hole was measured when a crack was initiated. The maximum hole-expanding ratio (%) was determined from the following formula (2) to evaluate stretch flangeability:

$$\text{Maximum hole-expanding ratio } \lambda \text{ (\%)} = \{(D_f - D_0)/D_0\} \times 100 \qquad \cdots (2)$$

where $D_f$ represents the hole diameter (mm) when a crack was initiated, and $D_0$ represents an initial hole diameter (mm). In the present invention, $\lambda \geq 15\%$ was determined to be good.

[Table 1]

| Steel symbol | Composition (% by mass) | | | | | | | | | | | | | | | | | Remarks |
|---|---|---|---|---|---|---|---|---|---|---|---|---|---|---|---|---|---|---|
| | C | Si | Mn | Al | P | S | N | Cr | V | Mo | Ti | Nb | B | Ni | Cu | Ca | REM | |
| A | 0.28 | 1.30 | 2.5 | 0.037 | 0.010 | 0.001 | 0.0037 | - | - | - | - | - | - | - | - | - | - | Comparative steel |
| B | 0.21 | 1.52 | 2.3 | 0.044 | 0.011 | 0.002 | 0.0033 | 1.0 | - | - | - | - | - | - | - | - | - | Comparative steel |
| C | 0.20 | 0.40 | 1.5 | 0.035 | 0.012 | 0.001 | 0.0036 | - | - | - | 0.01 | 0.013 | - | - | 0.15 | - | - | Comparative steel |
| D | 0.12 | 0.15 | 2.3 | 0.038 | 0.010 | 0.002 | 0.0034 | 1.0 | - | - | - | - | - | - | - | - | - | Comparative steel |
| E | 0.18 | 1.50 | 2.3 | 0.041 | 0.011 | 0.002 | 0.0031 | 1.0 | - | - | 0.02 | - | 0.0010 | - | - | - | - | Comparative steel |
| F | 0.19 | 0.98 | 1.7 | 0.037 | 0.012 | 0.004 | 0.0040 | 0.5 | 0.2 | - | - | - | - | - | - | - | - | Comparative steel |
| G | 0.17 | 1.22 | 1.4 | 0.038 | 0.014 | 0.003 | 0.0031 | 0.8 | - | 0.1 | - | - | - | - | - | - | - | Comparative steel |
| H | 0.20 | 1.34 | 1.7 | 0.043 | 0.011 | 0.002 | 0.0035 | - | - | - | - | - | - | 0.8 | - | - | - | Comaparative steel |
| I | 0.18 | 1.16 | 1.8 | 0.034 | 0.013 | 0.004 | 0.0036 | 0.5 | - | - | - | - | - | - | - | 0.003 | - | Comparative steel |
| J | 0.23 | 0.99 | 2.1 | 0.041 | 0.015 | 0.005 | 0.0041 | 1.2 | - | - | 0.02 | - | 0.0010 | - | - | - | 0.002 | Applicable steel |
| K | 0.12 | 0.71 | 0.2 | 0.039 | 0.013 | 0.004 | 0.0034 | - | - | - | - | - | - | - | - | - | - | Comparative steel |

[Table 2]

| No. | Steel symbol | Manufacturing method | | | | | | | volume fraction of microstructure (%) | | | | Ms (°C) | Remarks |
|---|---|---|---|---|---|---|---|---|---|---|---|---|---|---|
| | | Annealing temperature (°C) | Holding time *1 (s) | Cooling rate *2 (°C/s) | Holding temperature (°C) | Holding time *3 (s) | Cooling rate *4 (°C/s) | Presence or absence of plating treatment | Martensite | Ferrite | Retained austenite | Bainite | | |
| 1 | A | 880 | 180 | 45 | 250 | 100 | 20 | - | 96 | 0 | 4 | 0 | 332 | Comparative Example |
| 2 | | 900 | 150 | 40 | 400 | 90 | 20 | - | 47 | 8 | 8 | 37 | 323 | Comparative Example |
| 3 | B | 900 | 150 | 40 | 200 | 90 | 15 | - | 93 | 0 | 7 | 0 | 344 | Comparative Example |
| 4 | | 850 | 180 | 30 | 200 | 100 | 20 | - | 56 | 38 | 6 | 0 | 298 | Comparative Example |
| 5 | C | 880 | 240 | 40 | 300 | 80 | 20 | GI | 91 | 0 | 9 | 0 | 405 | Comparative Example |
| 6 | | 910 | 200 | 100 | 90 | 80 | 20 | - | 100 | 0 | 0 | 0 | 405 | Comparative Example |
| 7 | D | 880 | 180 | 30 | 200 | 100 | 20 | - | 91 | 0 | 9 | 0 | 385 | Comparative Example |
| 8 | E | 860 | 180 | 35 | 300 | 100 | 20 | - | 82 | 12 | 6 | 0 | 346 | Comparative Example |
| 9 | | 850 | 150 | 30 | 500 | 80 | 20 | - | 43 | 43 | 14 | 0 | 306 | Comparative Example |
| 10 | F | 880 | 200 | 20 | 360 | 100 | 15 | GA | 89 | 0 | 7 | 4 | 382 | Comparative Example |
| 11 | G | 880 | 180 | 30 | 350 | 90 | 15 | GI | 96 | 0 | 4 | 0 | 399 | Comparative Example |
| 12 | H | 900 | 180 | 25 | 300 | 120 | 20 | - | 95 | 0 | 5 | 0 | 379 | Comparative Example |
| 13 | I | 880 | 200 | 35 | 300 | 120 | 15 | - | 94 | 0 | 6 | 0 | 387 | Comparative Example |

(continued)

| No. | Steel symbol | Manufacturing method | | | | | | | volume fraction of microstructure (%) | | | | Ms (°C) | Remarks |
|---|---|---|---|---|---|---|---|---|---|---|---|---|---|---|
| | | Annealing temperature (°C) | Holding time *1 (s) | Cooling rate *2 (°C/s) | Holding temperature (°C) | Holding time *3 (s) | Cooling rate *4 (°C/s) | Presence or absence of plating treatment | Martensite | Ferrite | Retained austenite | Bainite | | |
| 14 | J | 870 | 180 | 35 | 300 | 120 | 15 | - | 92 | 0 | 8 | 0 | 344 | Invention Example |
| 15 | K | 880 | 180 | 40 | 400 | 100 | 20 | - | 37 | 58 | 5 | 0 | 426 | Comparative Example |

*1 Holding time at annealing temperature, *2 Cooling rate from annealing temperature to temperature of low-temperature holding,
*3 Holding time attemperature of low-temperature holding, *4 Cooling rate from temperature of low-temperature holding
GI: Galvanizing
GA Galvannealing

[Table 3]

| No. | Steel symbol | Full-width at half maximum of nano-hardness (GPa) | Mechanical properties | | | | Remarks |
|---|---|---|---|---|---|---|---|
| | | | TS (MPa) | T. EL (%) | TS × T. EL (MPa·%) | λ (%) | |
| 1 | A | 2.4 | 1587 | 11.3 | 17933 | 28 | Comparative Example |
| 2 | | 1.8 | 1412 | 14.1 | 19909 | 1 | Comparative Example |
| 3 | B | 2.8 | 1597 | 11.0 | 17567 | 26 | Comparative Example |
| 4 | | 2.3 | 1389 | 12.7 | 17640 | 23 | Comparative Example |
| 5 | C | 2.4 | 1413 | 11.8 | 16673 | 38 | Comparative Example |
| 6 | | 1.7 | 1498 | 7.4 | 11085 | 39 | Comparative Example |
| 7 | D | 2.3 | 1336 | 13.1 | 17502 | 48 | Comparative Example |
| 8 | E | 2.7 | 1450 | 11.7 | 16965 | 34 | Comparative Example |
| 9 | | 1.8 | 1079 | 12.4 | 13380 | 13 | Comparative Example |
| 10 | F | 2.4 | 1343 | 12.7 | 17056 | 38 | Comparative Example |
| 11 | G | 2.5 | 1294 | 13.9 | 17987 | 38 | Comparative Example |
| 12 | H | 2.2 | 1431 | 11.7 | 16743 | 35 | Comparative Example |
| 13 | I | 2.1 | 1378 | 12.8 | 17638 | 37 | Comparative Example |
| 14 | J | 2.3 | 1353 | 12.8 | 17318 | 41 | Invention Example |
| 15 | K | 1.9 | 934 | 13.4 | 12516 | 13 | Comparative Example |

As is clear from Table 3, in the steel sheet of the present invention, the full-width at half maximum in the frequency distribution of nano-hardness, which is obtained by measuring the hardness distribution of martensite, is 2.0 GPa or more, a tensile strength of 980 MPa or higher and TS × T. El ≥ 14500 (MPa·%) are satisfied, and λ, which indicates stretch flangeability, is 15% or more. Thus, each of the steel sheets of the present invention has high strength and good formability.

Comparative Example

A slab to be formed into a steel sheet having the composition shown in Table 4 was heated to 1250°C and subjected to finish hot-rolling at 880°C. The hot-rolled steel sheet was coiled at 600°C, pickled, and cold-rolled at a reduction ratio of 65% to obtain a cold-rolled steel sheet having a thickness of 1.2 mm. The resultant cold-rolled steel sheet was subjected to heat treatment under the conditions shown in Table 5. Note that typical quenching was not performed on any sample shown in Table 5. Herein, the holding time in Table 5 was a time held at the holding temperature shown in Table 5. Ms in Table 5 was determined from the formula (1) described above.

Subsequently, some samples were galvanized, and furthermore some of the samples were galvannealed. The galvanizing treatment was performed on both surfaces in a coating bath having a temperature of 463°C at a coating weight of 50 g/m$^2$ (per surface). The galvannealing treatment was performed such that Fe% (iron content) in the coating layer was adjusted to 9% by mass.

The resultant steel sheet was subjected to temper rolling at a reduction ratio (elongation ratio) of 0.3% regardless of the presence or absence of a coating.

Table 5 also shows the volume fraction of a microstructure of the thus-obtained steel sheet.

Table 6 shows the measurement results of various properties of the steel sheet. A method for measuring the volume fraction of a microstructure and a method for evaluating the various properties are the same as those of the Inventive Example.

[Table 4]

| Steel symbol | Composition (% by mass) | | | | | | | | | | | Remarks |
| --- | --- | --- | --- | --- | --- | --- | --- | --- | --- | --- | --- | --- |
| | C | Si | Mn | Al | P | S | N | Cr | Ti | Nb | B | |
| L | 0.12 | 1.00 | 2.3 | 0.042 | 0.012 | 0.003 | 0.0044 | 0.5 | 0.02 | - | 0.0018 | Comparative steel |
| M | 0.12 | 1.00 | 2.3 | 0.042 | 0.020 | 0.002 | 0.0034 | 1.0 | - | - | - | Comparative steel |
| N | 0.12 | 1.50 | 2.3 | 0.043 | 0.011 | 0.003 | 0.0042 | 1.0 | 0.02 | - | 0.0010 | Comparative steel |
| O | 0.12 | 1.50 | 2.3 | 0.038 | 0.044 | 0.005 | 0.0025 | 1.0 | - | - | - | Comparative steel |
| P | 0.15 | 1.00 | 2.3 | 0.041 | 0.009 | 0.003 | 0.0042 | 0.5 | 0.02 | - | 0.0012 | Comparative steel |
| Q | 0.15 | 1.00 | 2.3 | 0.043 | 0.011 | 0.002 | 0.0029 | 1.0 | 0.02 | - | 0.0009 | Comparative steel |
| R | 0.15 | 1.50 | 2.3 | 0.043 | 0.022 | 0.002 | 0.0035 | - | - | - | - | Comparative steel |
| S | 0.15 | 1.50 | 2.3 | 0.040 | 0.013 | 0.001 | 0.0043 | 0.5 | - | - | - | Comparative steel |
| T | 0.15 | 1.50 | 2.3 | 0.044 | 0.010 | 0.002 | 0.0029 | 1.0 | - | - | - | Comparative steel |
| U | 0.15 | 1.50 | 2.3 | 0.040 | 0.012 | 0.002 | 0.0043 | 0.5 | 0.02 | - | 0.0012 | Comparative steel |
| V | 0.15 | 1.50 | 2.3 | 0.048 | 0.014 | 0.004 | 0.0044 | 1.0 | 0.02 | - | 0.0015 | Comparative steel |
| W | 0.15 | 1.50 | 2.3 | 0.040 | 0.030 | 0.002 | 0.0043 | 1.0 | - | 0.04 | - | Comparative steel |
| X | 0.15 | 1.50 | 2.8 | 0.045 | 0.004 | 0.002 | 0.0044 | - | 0.02 | - | - | Comparative steel |
| Y | 0.20 | 0.50 | 1.6 | 0.041 | 0.040 | 0.001 | 0.0025 | - | 0.02 | - | 0.0025 | Comparative steel |
| Z | 0.20 | 1.50 | 2.3 | 0.039 | 0.010 | 0.002 | 0.0036 | 1.0 | 0.02 | - | 0.0009 | Comparative steel |

[Table 5]

| No. | Steel symbol | Manufacturing method | | | | | | | | Volume fraction of microstructure (%) | | | | Ms (°C) | Remarks |
|---|---|---|---|---|---|---|---|---|---|---|---|---|---|---|---|
| | | Annealing temperature (°C) | Holding time *1 (s) | Cooling rate to 500°C *2 (°C/s) | Cooling rate from 500°C *3 (°C/s) | Temperature of low-temperature holding (°C) | Holding time *4 (s) | Cooling rate *5 (°C/s) | Presence or absence of plating treatment | Martensite | Ferrite | Retained austenite | Bainite | | |
| 16 | L | 750 | 300 | 15 | 10 | 250 | 30 | 15 | - | 51 | 44 | 1 | 4 | 338 | Comparative Example |
| 17 | | 850 | 180 | 15 | 4 | 200 | 60 | 20 | - | 26 | 8 | 4 | 62 | 368 | Comparative Example |
| 18 | M | 820 | 180 | 30 | 8 | 300 | 15 | 20 | GI | 73 | 25 | 0 | 2 | 358 | Comparative Example |
| 19 | N | 800 | 95 | 15 | 10 | 270 | 20 | 20 | - | 53 | 42 | 2 | 3 | 332 | Comparative Example |
| 20 | O | 830 | 120 | 20 | 20 | 240 | 30 | 15 | - | 52 | 41 | 2 | 5 | 327 | Comparative Example |
| 21 | P | 840 | 100 | 5 | 8 | 260 | 60 | 10 | - | 51 | 40 | 2 | 7 | 320 | Comparative Example |
| 22 | Q | 820 | 180 | 15 | 15 | 290 | 100 | 20 | - | 86 | 12 | 0 | 2 | 353 | Comparative Example |
| 23 | R | 820 | 250 | 50 | 8 | 280 | 100 | 15 | - | 53 | 39 | 3 | 5 | 332 | Comparative Example |
| 24 | | 820 | 180 | 3 | 10 | 250 | 60 | 15 | - | 9 | 68 | 2 | 21 | 312 | Comparative Example |
| 25 | S | 820 | 200 | 20 | 15 | 280 | 60 | 8 | - | 52 | 45 | 1 | 2 | 321 | Comparative Example |
| 26 | T | 830 | 200 | 15 | 15 | 250 | 30 | 15 | - | 54 | 39 | 2 | 5 | 313 | Comparative Example |
| 27 | U | 820 | 180 | 15 | 12 | 250 | 30 | 15 | - | 50 | 45 | 2 | 3 | 315 | Comparative Example |

EP 2 460 901 B1

17

| No. | Steel symbol | Manufacturing method | | | | | | | | Volume fraction of microstructure (%) | | | | Ms (°C) | Remarks |
|---|---|---|---|---|---|---|---|---|---|---|---|---|---|---|---|
| | | Annealing temperature (°C) | Holding time *1 (s) | Cooling rate to 500°C *2 (°C/s) | Cooling rate from 500°C *3 (°C/s) | Temperature of low-temperature holding (°C) | Holding time *4 (s) | Cooling rate *5 (°C/s) | Presence or absence of plating treatment | Martensite | Ferrite | Retained austenite | Bainite | | |
| 28 | V | 820 | 180 | 15 | 12 | 250 | 60 | 20 | - | 64 | 31 | 2 | 3 | 327 | Comparative Example |
| 29 | W | 820 | 180 | 15 | 10 | 250 | 30 | 15 | - | 67 | 32 | 1 | 0 | 330 | Comparative Example |
| 30 | X | 800 | 200 | 20 | 10 | 250 | 60 | 15 | - | 69 | 27 | 2 | 2 | 333 | Comparative Example |
| 31 | Y | 840 | 250 | 30 | 30 | 300 | 60 | 15 | GA | 61 | 30 | 0 | 9 | 350 | Comparative Example |
| 32 | | 750 | 60 | 20 | 10 | 250 | 60 | 15 | - | 2 | 80 | 0 | 18 | - *6 | Comparative Example |
| 33 | Z | 820 | 400 | 15 | 10 | 260 | 30 | 20 | - | 93 | 5 | 2 | 0 | 334 | Comparative Example |

*1 Holding time at annealing temperature, *2 Cooling rate from annealing temperature to 500°C, *3 Cooling rate from 500°C to temperature of low-temperature holding,
*4 Holding time at temperature of low-temperature holding, GI: Galvanizing
*5 Cooling rate from temperature of low-temperature holding, *6 Unmeasurable GA: Galvannealing

EP 2 460 901 B1

[Table 6]

| No. | Steel symbol | Full-width at half maximum of nano-hardness (GPa) | Mechanical properties | | | | | Remarks |
|---|---|---|---|---|---|---|---|---|
| | | | YS (MPa) | TS (MPa) | T.EL (%) | TS × T. EL (MPa·%) | λ (%) | |
| 16 | L | 2.1 | 617 | 1125 | 15.2 | 17105 | 22 | Comparative Example |
| 17 | | 2.2 | 882 | 1207 | 10.2 | <u>12311</u> | 49 | Comparative Example |
| 18 | M | 2.6 | 819 | 1289 | 12.1 | 15599 | 35 | Comparative Example |
| 19 | N | 2.2 | 772 | 1270 | 13.9 | 17654 | 25 | Comparative Example |
| 20 | O | 2.4 | 661 | 1218 | 14.8 | 17960 | 19 | Comparative Example |
| 21 | P | 2.6 | 804 | 1313 | 11.7 | 15301 | 23 | Comparative Example |
| 22 | Q | 2.5 | 849 | 1393 | 11.0 | 15257 | 45 | Comparative Example |
| 23 | R | 2.5 | 576 | 1066 | 18.9 | 20141 | 16 | Comparative Example |
| 24 | | 2.3 | 680 | 1033 | 13.0 | <u>13429</u> | 25 | Comparative Example |
| 25 | S | 2.4 | 771 | 1255 | 14.8 | 18568 | 16 | Comparative Example |
| 26 | T | 2.2 | 924 | 1341 | 10.8 | 14421 | 22 | Comparative Example |
| 27 | U | 2.3 | 775 | 1343 | 12.9 | 17263 | 24 | Comparative Example |
| 28 | V | 2.1 | 837 | 1371 | 12.2 | 16732 | 24 | Comparative Example |
| 29 | W | 2.3 | 838 | 1420 | 12.4 | 17606 | 20 | Comparative Example |
| 30 | X | 2.7 | 913 | 1429 | 12.0 | 17147 | 21 | Comparative Example |
| 31 | Y | 2.4 | 850 | 1434 | 11.3 | 16206 | 15 | Comparative Example |
| 32 | | - *6 | 595 | <u>651</u> | 21.0 | <u>13671</u> | 60 | Comparative Example |
| 33 | Z | 2.2 | 1005 | 1599 | 11.5 | 18305 | 25 | Comparative Example |
| *6 Unmeasurable | | | | | | | | |

As is clear from Table 6, in each of the steel sheets, the full-width at half maximum in the frequency distribution of nano-hardness, which is obtained by measuring the hardness distribution of martensite, is 2.0 GPa or more, a tensile strength of 980 MPa or higher and TS × T. El ≥ 14500 (MPa·%) are satisfied, and λ, which indicates stretch flangeability, is 15% or more. Thus, each of the steel sheets of the present invention has high strength and good formability.

**Claims**

1. A high strength steel sheet having a tensile strength of 980 MPa or higher, comprising a composition including, on a mass% basis:

   C: 0.1% or more and 0.3% or less;
   Si: 1.6% or less;
   Mn: 1.5% or more and 2.5% or less;
   P: 0.1% or less;
   S: 0.07% or less;
   Al: 1.0% or less;
   N: 0.008% or less; and
   REM: 0.001% or more and 0.005% or less, optionally comprising at least one selected from Cr: 0.05% or more and 5.0% or less; V: 0.005% or more and 1.0% or less; Mo: 0.005% or more and 0.5% or less; Ti: 0.01% or more and 0.1% or less; Nb: 0.01% or more and 0.1% or less; B: 0.0003% or more and 0.0050% or less; Ni: 0.05% or more and 2.0% or less; Cu: 0.05% or more and 2.0% or less; and Ca: 0.001% or more and 0.005% or less, with the balance being Fe and incidental impurities, wherein a steel microstructure includes, on an area ratio basis, 50% or more of martensite, 50% or less of ferrite (including 0%), 10% or less of bainite (including 0%), and 10% or less of retained austenite (including 0%); and the full-width at half maximum in a frequency distribution of nano-hardness, which is obtained by measuring a hardness distribution of the martensite, is 2.0 GPa or more.

2. The high strength steel sheet according to Claim 1, wherein a galvanized layer or a galvannealed layer is formed on a surface of the steel sheet.

3. A method for manufacturing a high strength steel sheet, comprising the steps of hot-rolling and then cold-rolling a slab having the composition according to Claim 1 to form a cold-rolled steel sheet, wherein the slab is subjected to finish hot-rolling at a temperature of 870 °C or higher and 950 °C or lower; when the cold-rolled steel sheet is annealed in a temperature range of 700°C or higher and 950°C or lower, annealing the cold-rolled steel sheet in a temperature range of 700°C or higher and lower than 770°C for 100 seconds or longer and 1800 seconds or shorter, in a temperature range of 770°C or higher and lower than 850°C for 50 seconds or longer and 1800 seconds or shorter, or in a temperature range of 850°C or higher and 950°C or lower for 15 seconds or longer and 1800 seconds or shorter; subsequently cooling the steel sheet to 500°C at a cooling rate of 4 °C/s or more and from 500°C at a cooling rate of 7 °C/s or more; holding the steel sheet in a temperature range of 100°C to (Ms - 10°C) for 10 seconds or longer; and subsequently cooling the steel sheet at a cooling rate of 5 °C/s or more.

4. A method for manufacturing a high strength steel sheet, comprising the steps of hot-rolling and then cold-rolling a slab having the composition according to Claim 1 to form a cold-rolled steel sheet, wherein the slab is subjected to finish hot-rolling at a temperature of 870 °C or higher and 950 °C or lower; when the cold-rolled steel sheet is annealed in a temperature range of 700°C or higher and 950°C or lower, annealing the cold-rolled steel sheet in a temperature range of 700°C or higher and lower than 770°C for 100 seconds or longer and 1800 seconds or shorter, in a temperature range of 770°C or higher and lower than 850°C for 50 seconds or longer and 1800 seconds or shorter, or in a temperature range of 850°C or higher and 950°C or lower for 15 seconds or longer and 1800 seconds or shorter; subsequently cooling the steel sheet at a cooling rate of 20 °C/s or more; holding the steel sheet in a temperature range of 100°C to (Ms - 10°C) for 80 seconds or longer; and subsequently cooling the steel sheet at a cooling rate of 15 °C/s or more.

5. A method for manufacturing a high strength steel sheet, comprising the steps of hot-rolling and then cold-rolling a slab having the composition according to Claim 1 to form a cold-rolled steel sheet, wherein the slab is subjected to finish hot-rolling at a temperature of 870 °C or higher and 950 °C or lower; annealing the cold-rolled steel sheet in a temperature range of 850°C or higher and 950°C or lower for 15 seconds or longer and 600 seconds or shorter; subsequently cooling the steel sheet at a cooling rate of 20 °C/s or more; holding the steel sheet in a temperature range of 100°C to (Ms - 10°C) for 80 seconds or longer; and subsequently cooling the steel sheet at a cooling rate of 15 °C/s or more.

**Patentansprüche**

1. Hochfestes Stahlblech mit einer Zugfestigkeit von 980 MPa oder höher, umfassend eine Zusammensetzung, die auf Massen-%-Basis umfasst:

C: 0,1% oder mehr und 0,3% oder weniger;
Si: 1,6% oder weniger;
Mn: 1,5% oder mehr und 2,5% oder weniger;
P: 0,1% oder weniger;
S: 0,07% oder weniger;
Al: 1,0% oder weniger;
N: 0,008% oder weniger; und
REM: 0,001% oder mehr und 0,005% oder weniger, wahlweise umfassend wenigstens ein Element, das ausgewählt ist aus Cr: 0,05% oder mehr und 5,0% oder weniger; V: 0,005% oder mehr und 1,0% oder weniger; Mo: 0,005% oder mehr und 0,5% oder weniger; Ti: 0,01% oder mehr und 0,1% oder weniger; Nb: 0,01% oder mehr und 0,1% oder weniger; B: 0,0003% oder mehr und 0,0050% oder weniger; Ni: 0,05% oder mehr und 2,0% oder weniger; Cu: 0,05% oder mehr und 2,0% oder weniger; und Ca: 0,001% oder mehr und 0,005% oder weniger, wobei der Rest Fe und zufällige Verunreinigungen sind, wobei ein Stahlmikrogefüge auf einer Flächenverhältnisbasis 50% oder mehr Martensit, 50% oder weniger Ferrit (einschließlich 0%), 10% oder weniger Bainit (einschließlich 0%) und 10% oder weniger Restaustenit (einschließlich 0%) umfasst; und die volle Breite bei halbem Maximum bei einer Häufigkeitsverteilung der Nanohärte, die man durch Messen einer Härteverteilung des Martensits erhält, 2,0 GPa oder mehr beträgt.

2. Hochfestes Stahlblech nach Anspruch 1, bei dem eine galvanisierte Schicht oder eine galvanisch angelassene Schicht auf einer Oberfläche des Stahlblechs ausgebildet ist.

3. Verfahren zur Herstellung eines hochfesten Stahlblechs, umfassend die Schritte des Warmwalzens und anschließenden Kaltwalzens einer Bramme mit der Zusammensetzung nach Anspruch 1, um ein kaltgewalztes Stahlblech auszubilden, wobei die Bramme einem Warmfertigwalzen bei einer Temperatur von 870°C oder höher und 950°C oder niedriger unterzogen wird; wenn das kaltgewalzte Stahlblech in einem Temperaturbereich von 700°C oder höher und 950°C oder niedriger angelassen wird, des Anlassens des kaltgewalzten Stahlblechs in einem Temperaturbereich von 700°C oder höher und niedriger als 770°C für 100 Sekunden oder länger und 1800 Sekunden oder kürzer, in einem Temperaturbereich von 770°C oder höher und niedriger als 850°C für 50 Sekunden oder länger und 1800 Sekunden oder kürzer oder in einem Temperaturbereich von 850°C oder höher und 950°C oder niedriger für 15 Sekunden oder länger und 1800 Sekunden oder kürzer; des anschließenden Abkühlens des Stahlblechs auf 500°C mit einer Abkühlrate von 4°C/s oder mehr und von 500°C mit einer Abkühlrate von 7°C/s oder mehr; und des Haltens des Stahlblechs in einem Temperaturbereich von 100°C bis (Ms - 10°C) für 10 Sekunden oder länger; und anschließendes Abkühlen des Stahlblechs mit einer Abkühlgeschwindigkeit von 5°C/s oder mehr.

4. Verfahren zur Herstellung eines hochfesten Stahlblechs, umfassend die Schritte des Warmwalzens und anschließenden Kaltwalzens einer Bramme mit der Zusammensetzung nach Anspruch 1, um ein kaltgewalztes Stahlblech auszubilden, wobei die Bramme einem Warmfertigwalzen bei einer Temperatur von 870°C oder höher und 950°C oder niedriger unterzogen wird; wenn das kaltgewalzte Stahlblech in einem Temperaturbereich von 700°C oder höher und 950°C oder niedriger angelassen wird, des Anlassens des kaltgewalzten Stahlblechs in einem Temperaturbereich von 700°C oder höher und niedriger als 770°C für 100 Sekunden oder länger und 1800 Sekunden oder kürzer, in einem Temperaturbereich von 770°C oder höher und niedriger als 850°C für 50 Sekunden oder länger und 1800 Sekunden oder kürzer oder in einem Temperaturbereich von 850°C oder höher und 950°C oder niedriger für 15 Sekunden oder länger und 1800 Sekunden oder kürzer; des anschließenden Abkühlens des Stahlblechs mit einer Abkühlgeschwindigkeit von 20°C/s oder mehr; des Haltens des Stahlblechs in einem Temperaturbereich von 100°C bis (Ms - 10°C) für 80 Sekunden oder länger; und des anschließenden Abkühlens des Stahlblechs mit einer Abkühlgeschwindigkeit von 15°C/s oder mehr.

5. Verfahren zur Herstellung eines hochfesten Stahlblechs, umfassend die Schritte des Warmwalzens und anschließenden Kaltwalzens einer Bramme mit der Zusammensetzung nach Anspruch 1, um ein kaltgewalztes Stahlblech auszubilden, wobei die Bramme einem Warmfertigwalzen bei einer Temperatur von 870°C oder höher und 950°C oder niedriger unterzogen wird; des Anlassens des kaltgewalzten Stahlblechs in einem Temperaturbereich von 850°C oder höher und 950°C oder niedriger für 15 Sekunden oder länger und 600 Sekunden oder kürzer; des anschließenden Abkühlens des Stahlblechs mit einer Abkühlgeschwindigkeit von 20°C/s oder mehr; des Haltens des Stahlblechs in einem Temperaturbereich von 100°C bis (Ms - 10°C) für 80 Sekunden oder länger; und des anschließenden Abkühlens des Stahlblechs mit einer Abkühlgeschwindigkeit von 15°C/s oder mehr.

**Revendications**

1. Tôle d'acier à haute résistance ayant une résistance à la traction de 980 MPa ou plus, comprenant une composition incluant, sur une base de pourcentage massique :

C : 0,1 % ou plus et 0,3 % ou moins ;
Si : 1,6 % ou moins ;
Mn : 1,5 % ou plus et 2,5 % ou moins ;
P : 0,1 % ou moins ;
S : 0,07 % ou moins ;
Al : 1,0 % ou moins ;
N : 0,008 % ou moins ; et
terres rares : 0,001 % ou plus et 0,005 % ou moins, comprenant éventuellement au moins un élément choisi parmi Cr : 0,05 % ou plus et 5,0 % ou moins ; V : 0,005 % ou plus et 1,0 % ou moins ; Mo : 0,005 % ou plus et 0,5 % ou plus ; Ti : 0,01 % ou plus et 0,1 % ou moins ; Nb : 0,01 % ou plus et 0,1 % ou moins ; B : 0,0003 % ou plus et 0,0050 % ou moins ; Ni : 0,05 % ou plus et 2,0 % ou moins ; Cu : 0,05 % ou plus et 2,0 % ou moins ; et Ca : 0,001 % ou plus et 0,005 % ou moins, le reste étant du fer (Fe) et des impuretés inévitables, une microstructure de l'acier comprenant, sur une base de rapport surfacique, 50 % ou plus de martensite, 50 % ou moins de ferrite (0 % inclus), 10 % ou moins de bainite (0 % inclus) et 10 % ou moins d'austénite résiduelle (0 % inclus) ; et la largeur totale à mi-hauteur dans une distribution de fréquence de nano-dureté, qui est obtenue en mesurant une distribution de dureté de la martensite, est supérieure ou égale à 2,0 GPa.

2. Tôle d'acier à haute résistance selon la revendication 1, dans laquelle une couche galvanisée ou une couche galvanisée recuite est formée sur une surface de la tôle d'acier.

3. Procédé de fabrication d'une tôle d'acier à haute résistance, comprenant les étapes de laminage à chaud puis de laminage à froid d'une brame ayant la composition selon la revendication 1 pour former une tôle d'acier laminée à froid, la brame étant soumise à un laminage à chaud de finissage à une température de 870 °C ou plus et 950 °C ou moins ; lorsque la tôle d'acier laminée à froid est recuite dans une plage de température de 700 °C ou plus et 950 °C ou moins, recuit de la tôle d'acier laminée à froid dans une plage de température de 700 °C ou plus et inférieure à 770 °C pendant 100 secondes ou plus et 1800 secondes ou moins, dans une plage de température de 770 °C ou plus et inférieure à 850 °C pendant 50 secondes ou plus et 1800 secondes ou moins, ou dans une plage de température de 850 °C ou plus et 950 °C ou moins pendant 15 secondes ou plus et 1800 secondes ou moins ; ensuite, refroidissement de la tôle d'acier à 500 °C à une vitesse de refroidissement de 4 °C/s ou plus et à partir de 500 °C à une vitesse de refroidissement de 7 °C/s ou plus ; maintien de la tôle d'acier dans une plage de température de 100 °C à (Ms -10° C) pendant 10 secondes ou plus ; et ensuite refroidissement de la tôle d'acier à une vitesse de refroidissement de 5 °C/s ou plus.

4. Procédé de fabrication d'une tôle d'acier à haute résistance, comprenant les étapes de laminage à chaud puis de laminage à froid d'une brame ayant la composition selon la revendication 1 pour former une tôle d'acier laminée à froid, la brame étant soumise à un laminage à chaud de finissage à une température de 870 °C ou plus et 950 °C ou moins ; lorsque la tôle d'acier laminée à froid est recuite dans une plage de température de 700 °C ou plus et 950 °C ou moins, recuit de la tôle d'acier laminée à froid dans une plage de température de 700 °C ou plus et inférieure à 770 °C pendant 100 secondes ou plus et 1800 secondes ou moins, dans une plage de température de 770 °C ou plus et inférieure à 850 °C pendant 50 secondes ou plus et 1800 secondes ou moins, ou dans une plage de température de 850 °C ou plus et 950 °C ou moins pendant 15 secondes ou plus et 1800 secondes ou moins ; ensuite, refroidissement de la tôle d'acier à une vitesse de refroidissement de 20 °C/s ou plus ; maintien de la tôle d'acier dans une plage de température de 100 °C à (Ms -10° C) pendant 80 secondes ou plus ; et ensuite refroidissement de la tôle d'acier à une vitesse de refroidissement de 15 °C/s ou plus.

5. Procédé de fabrication d'une tôle d'acier à haute résistance, comprenant les étapes de laminage à chaud puis de laminage à froid d'une brame ayant la composition selon la revendication 1 pour former une tôle d'acier laminée à froid, la brame étant soumise à un laminage à chaud de finissage à une température de 870 °C ou plus et 950 °C ou moins ; recuit de la tôle d'acier laminée à froid dans une plage de température de 850 °C ou plus et inférieure à 950 °C pendant 15 secondes ou plus et 600 secondes ou moins ; ensuite, refroidissement de la tôle d'acier à une vitesse de refroidissement de 20 °C/s ou plus ; maintien de la tôle d'acier dans une plage de température de 100 °C à (Ms -10° C) pendant 80 secondes ou plus ; et ensuite refroidissement de la tôle d'acier à une vitesse de refroidissement de 15 °C/s ou plus.

# FIG. 1

# FIG. 2

# FIG. 3

# FIG. 4

# FIG. 5

**EP 2 460 901 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1853389 A
- JP 3610883 B
- JP 11061327 A
- JP 2003213369 A
- JP 2003213370 A
- JP 2003505604 W
- JP 6093340 A
- JP 6108152 A
- JP 7011383 A
- JP 10060593 A
- JP 2005281854 A
- JP 3231204 B
- JP 2001207234 A
- JP 7207413 A
- JP 2005264328 A
- JP 2616350 B
- JP 2621744 B
- JP 2826058 B
- JP 2006207018 A
- JP 2008169475 A